# EUROPÄISCHE PATENTANMELDUNG

(11) **EP 4 151 072 A1**
(43) Veröffentlichungstag der Anmeldung: **22.03.2023**
(21) Anmeldenummer: 22183997.0
(22) Anmeldetag: 11.07.2022
(51) Int. Cl.: A01D 41/127, A01F 7/06

(54) **ABSCHEIDEEINRICHTUNG FÜR EINEN MÄHDRESCHER SOWIE MÄHDRESCHER MIT EINER SOLCHEN ABSCHEIDEEINRICHTUNG**

(30) Priorität: 20.09.2021 DE 102021124214
(71) Anmelder: CLAAS Selbstfahrende Erntemaschinen GmbH, 33428 Harsewinkel (DE)
(72) Erfinder: Baumgarten, Joachim, 48361 Beelen (DE); Neitemeier, Dennis, 59510 Lippetal (DE); Barther, Marvin, 33803 Steinhagen (DE); Bormann, Bastian, 33334 Gütersloh (DE); Bußmann, Jens, 49179 Ostercappeln (DE); Diekamp, Andreas, 49176 Hilter (DE); Holtmann, Bernd, 48324 Sendenhorst (DE)
(74) Vertreter: CLAAS Gruppe

(57) **Zusammenfassung**

Die vorliegende Erfindung betrifft eine Abscheideeinrichtung (7) für einen Mähdrescher (1) mit zumindest einem nach dem Axial-Abscheideaggregat (13), das einen Abscheidekorb (14) und ein daran befestigtes Dachelement (15) aufweist, die gemeinsam ein hohlzylinderförmiges Gehäuse des Abscheideaggregats ausbilden, mit einem drehbar im Gehäuse gelagerten Abscheiderotor (16), sodass zwischen dem Gehäuse des Abscheideaggregats und dem Abscheiderotor ein Zwischenraum zum Fördern von Erntegut umfänglich und entlang einer Längsachse (17) des Abscheideaggregats definiert ist, und mit einer Sensoreinrichtung mit zumindest einem Kornsensor (21). Der Kornsensor (21) ist derart innerhalb und/oder außerhalb des Abscheideaggregats angeordnet, dass eine mittels des Abscheideaggregats abgeschiedene Menge und/oder eine in dem im Zwischenraum geförderten Erntegut enthaltene Menge an Körnern zumindest entlang der Längsachse des Abscheideaggregats vom Einlaufbereich (18) bis zum Auslaufbereich (19) des Abscheideaggregats stellenweise bestimmbar ist, ohne den Erntegutstrom zu beeinträchtigen.

## Beschreibung

Die vorliegende Anmeldung betrifft eine Abscheideeinrichtung für einen Mähdrescher gemäß dem Oberbegriff des unabhängigen Patentanspruchs 1 sowie einen Mähdrescher gemäß dem Oberbegriff des unabhängigen Patentanspruchs 15.

Bei dem Betrieb eines Mähdreschers gilt es einzelne Anforderungen miteinander in Einklang zu bringen. Eine Anforderung ist darin zu sehen einen hohen Durchsatz an Erntegut zu erzielen, um die eingesetzten Ressourcen wie Maschinen und Arbeitskraft wirtschaftlich zu nutzen und die Kosten des Betriebs des Mähdreschers möglich gering zu halten. Eine weitere Anforderung ist darin zu sehen, eine möglichst hohe Trennung von im Erntegutstrom enthaltenen Körnern und Nichtkornbestandteilen zu erzielen. Ferner sollen die im Mähdrescher getrennten bzw. abgeschiedenen Körnern einen möglichst geringen Anteil an Nichtkornbestandteilen enthalten. Geringe Kornverluste, also ein hoher Grad an Trennung, sind im Allgemeinen nur dann erreichbar, wenn dafür in Kauf genommen wird, dass ein gewisser Anteil an Nichtkornbestandteilen in den abgeschiedenen Körnern enthalten ist, was jedoch die Qualität der gewonnenen Körner mindert. Sofern eine hohe Qualität der gewonnenen Körner erzielt werden soll, geht dies mit höheren Kornverlusten einher.

Um diese einander bedingenden Anforderungen miteinander zu vereinbaren, hat es sich als zweckmäßig erwiesen, sogenannte zweistufige Trennverfahren durchzuführen, bei denen in einem ersten Trennschritt ein Erntegutstrom einem sogenannten Dreschwerk zugeführt wird, in dem Körner aus diesem Erntegutstrom abgeschieden werden. Dieser mittels des Dreschwerks gedroschene Erntegutstrom wird dann einer sogenannten Abscheideeinrichtung für einen zweiten Trennschritt zugeführt, in dem aus dem gedroschenen Erntegutstrom weitere Körner abgeschieden werden.

Die Abscheidung von Körnern aus dem gedroschenen Erntegutstrom kann mittels verschiedenausgestalteter Abscheideeinrichtungen erfolgen. Die vorliegende Anmeldung betrifft insbesondere solche Abscheideeinrichtungen mit einem nach dem Axialflussprinzip arbeitenden Abscheideaggregat, bei dem ein Abscheiderotor in einem im Wesentlichen hohlzylindrischen Gehäuse des Abscheideaggregats drehbar gelagert angeordnet ist.

Da beispielsweise die Trennung und/oder der Anteil an zusammen mit dem Körnern abgeschiedenen Nichtkornbestandteilen in Abhängigkeit von sich ändernden Eigenschaften des Ernteguts variieren kann, ist es im Betrieb des Mähdreschers unter Umständen notwendig auf das Abscheideverhalten des Dreschwerks und/oder der Abscheideeinrichtung Einfluss zu nehmen, um einen optimalen Einklang der Anforderungen zu erzielen. Hierzu ist es beispielsweise möglich etwaige Betriebsparameter des Mähdreschers, beispielsweise die Fahrgeschwindigkeit des Mähdreschers, während des Betriebs zu verändern und/oder die Abscheideeinrichtung derart auszugestalten, dass sich das Abscheideverhalten der Abscheideeinrichtung unmittelbar verändern lässt, beispielsweise durch steuerbare Lamellen am Gehäuse des Abscheideaggregats.

Damit derartige Variationen überhaupt erkannt und Maßnahmen zur Änderung ergriffen werden können, ist es wesentlich, Kenntnis über eine abgeschiedene Menge an Körnern und/oder eine im Erntegutstrom verbleibende Menge an Körnern zu erlangen.

Die EP 1 479 280 A1 schlägt in diesem Kontext vor um ein Gehäuse eines nach dem Axialflussprinzip arbeitenden Abscheideaggregats herum sogenannte Kornsensoren (Sensoren zum Messen von Körnern) jeweils so anzuordnen, dass sie von aus dem Abscheideaggregat austretenden bzw. abgeschiedenen Körnern getroffen werden. Die Kornsensoren sind als akustische Sensoren ausgebildet, die das von den austretenden Körnern beim Kontakt mit dem Kornsensor verursachte Geräusch registrieren, wodurch pro Zeiteinheit eine gewisse Anzahl an Impulsen erzeugt wird. Basierend hierauf kann die abgeschiedene Kornmenge bestimmt werden. Die Kornsensoren sind dabei unterhalb eines sogenannten Abscheidekorbs des Abscheideaggregats, der einen Teil des Gehäuses des Abscheideaggregats ausbildet, in einem Zwischenraum zwischen einem unterhalb des Abscheidekorbs angeordneten Rücklaufboden und dem Abscheidekorb angeordnet.

Eine derartige Anordnung der Kornsensoren erlaubt zwar die Bestimmung der aus dem Abscheideaggregat abgeschiedenen Menge an Körnern, stellt jedoch ein gewisses Risiko im Hinblick auf einen störungsfreien und optimalen Betrieb der Abscheideeinrichtung dar. Dadurch, dass die Kornsensoren unmittelbar im mittels des Abscheideaggregats abgeschiedenen Erntegutstrom angeordnet sind, können diese den Erntegutstrom beeinträchtigen. So ist es beispielsweise möglich, dass sich Erntegutbestandteile, wie Körner und/oder Nichtkornbestandteile, auf den Kornsensoren ablagern und die Abscheidung von Körnern negativ beeinflussen, zumindest verändern. Insbesondere bei der Verwendung von Abscheidekörben mit steuerbaren Lamellen bietet ein Zwischenraum zwischen einem Abscheidekorb und dem Rücklaufboden nur einen kleinen Bereich für die Anordnung der Kornsensoren. Sofern sich Erntegutbestandteile auf dem Kornsensor ablagern, besteht demnach ein erhöhtes Risiko dahingehend, dass sich das Abscheideverhalten des Abscheideaggregats verschlechtert, da ein gewisser Anteil der abgeschiedenen Körner nicht auf den Rücklaufboden gelangt. Ferner kann es dazu kommen, dass die Kornsensoren nicht mehr dazu in der Lage sind, die einzelnen Körnern ordnungsgemäß zu detektieren, da der Detektionsbereich der Kornsensoren von den Ablagerungen bedeckt ist. Dies führt zu einer fehlerhaften Messung, einer hieraus resultierenden fehlerhaften Bestimmung der Kornverluste und in Konsequenz zu einer fehlerhaften Einflussnahme auf Betriebsparameter des Mähdreschers und/oder das Abscheideverhalten des Abscheideaggregats.

Ausgehend von dem vorstehend genannten Stand der Technik ist es demnach die Aufgabe der vorliegenden Erfindung, eine Abscheideeinrichtung mit einer Sensoreinrichtung anzugeben, mittels der Kornverluste in der Abscheideeinrichtung zuverlässig bestimmt, gleichzeitig jedoch ein störungsfreier Betrieb der Abscheideeinrichtung gewährleistet wird.

Diese Aufgabe wird erfindungsgemäß durch die Merkmale des unabhängigen Patentanspruchs 1 gelöst, wobei vorteilhafte Weiterbildungen der erfindungsgemäßen Abscheideeinrichtung Gegenstand der entsprechenden abhängigen Patentansprüche 2 bis 14 sind.

Demnach betrifft die vorliegende Erfindung eine Abscheideeinrichtung für einen Mähdrescher mit zumindest einem nach dem Axialflussprinzip arbeitenden Abscheideaggregat, das zumindest einen Abscheidekorb und zumindest ein daran befestigtes Dachelement aufweist, die gemeinsam ein im Wesentlichen hohlzylinderförmiges Gehäuse des Abscheideaggregats ausbilden, mit einem Abscheiderotor, der drehbar gelagert in dem Gehäuse des Abscheideaggregats aufgenommen ist, so dass zwischen dem Gehäuse des Abscheideaggregats und dem Abscheiderotor ein Zwischenraum zum Fördern von Erntegut umfänglich und entlang einer Längsachse des Abscheideaggregats definiert ist, und mit einer Sensoreinrichtung mit zumindest einem Kornsensor, wobei der Kornsensor mit einer Recheneinrichtung des Mähdreschers zur Verarbeitung der mittels des Kornsensors erzeugbaren Messsignale verbindbar ist. Die Abscheideeinrichtung ist dadurch gekennzeichnet, dass der Kornsensor derart innerhalb und/oder außerhalb des Abscheideaggregats angeordnet ist, dass eine mittels des Abscheideaggregats abgeschiedene Menge an Körnern und/oder eine in dem im Zwischenraum geförderten Erntegut enthaltene Menge an Körnern zumindest entlang der Längsachse des Abscheideaggregats von einem Einlaufbereich bis zu einem Auslaufbereich des Abscheideaggregats stellenweise bestimmbar ist, ohne hierbei den Erntegutstrom innerhalb und außerhalb des Gehäuses des Abscheideaggregats zu beeinträchtigen.

Mit anderen Worten, der zumindest eine Kornsensor ist derart innerhalb der Abscheideeinrichtung angeordnet, dass zuverlässig eine Menge an Körnern bestimmt werden kann, die Erntegutströme innerhalb der Abscheideeinrichtung jedoch unbeeinträchtigt bleiben. Beeinträchtigen bedeutet in diesem Zusammenhang, dass der zumindest eine Kornsensor innerhalb der Abscheideeinrichtung derart in Bezug auf die Erntegutströme angeordnet ist, dass sich das Fließverhalten des jeweiligen Erntegutstroms nahezu so verhält, als wäre kein Kornsensor in der Abscheideeinrichtung angeordnet. Der Begriff "nahezu" bedeutet in diesem Zusammenhang, dass zu vernachlässigende Abweichungen, die die Fließverhalten der Erntegutströme nicht beeinflussen, zulässig sind.

Durch die erfindungsgemäße Anordnung des zumindest einen Kornsensors der Sensoreinrichtung kann ein durchgehender Betrieb der Abscheideeinrichtung sichergestellt werden, wobei mögliche Unregelmäßigkeiten und hieraus resultierende Ausfälle der Abscheideeinrichtung im Betrieb der Abscheideeinrichtung, beispielsweise durch Ansammlungen von Erntegutbestandteilen im Bereich des zumindest einen Kornsensors vermieden werden. Das Vermeiden solcher Ansammlungen von Erntegutbestandteilen im Bereich des Kornsensors, insbesondere im Bereich des Kornsensors, der der Kornmessung dient (Detektionsbereich des zumindest einen Kornsensors), stellt ferner sicher, dass die Bestimmung der Menge an Körnern im jeweiligen Erntegutstrom und eine hierauf basierende Bestimmung der Kornverluste in der Abscheideeinrichtung immer exakt und optimal erfolgt. Eine fehlerbehaftete Messung des zumindest einen Kornsensors, die beispielsweise aus einem unzugänglichen Detektionsbereich des Kornsensors resultiert, wobei die Unzugänglichkeit durch eine Ansammlung von Erntegutbestandteilen im Detektionsbereich am Kornsensor generiert wird, kann somit ausgeschlossen werden.

Eine mittels des zumindest einen Kornsensors bestimmte Menge an Körnern und hieraus bestimmbare Kornverluste in der Abscheideeinrichtung können für eine mittels der Recheneinrichtung des Mähdreschers vollautomatische und/oder durch einen Benutzer des Mähdreschers manuelle Einstellung von Betriebsparametern des Mähdreschers und/oder des Abscheideverhaltens der Abscheideeinrichtung dienen, so dass der Betrieb des Mähdreschers im Hinblick auf einen optimalen Einklang der eingangs genannten Anforderungen angepasst wird.

Ein weiterer Vorteil der erfindungsgemäßen Anordnung des zumindest einen Kornsensors liegt darin, dass die Wartung bzw. Instandhaltung der Abscheideeinrichtung nicht aufwändiger bzw. komplexer wird. Die Zugänglichkeit zu den einzelnen Elementen der Abscheideeinrichtung wird durch die erfindungsgemäße Anordnung des zumindest einen Kornsensors demnach nicht beeinträchtigt.

Gemäß einer vorteilhaften Weiterbildung der Erfindung ist vorgesehen, dass mittels der Recheneinrichtung anhand der stellenweise bestimmbaren abgeschiedenen Menge an Körnern eine Kornabscheidekennlinie erzeugbar ist.

Das Erzeugen einer Kornabscheidekennlinie gibt dem Benutzer des Mähdreschers unmittelbar eine Auskunft über das Abscheideverhalten der Abscheideeinrichtung bzw. des zumindest einen Abscheideaggregats in der Abscheideeinrichtung entlang der Längsachse des Abscheideaggregats. Basierend hierauf kann der Benutzer des Mähdreschers eine manuelle Einstellung von Betriebsparametern des Mähdreschers und/oder des Abscheideverhaltens der Abscheideeinrichtung vornehmen, so dass der Betrieb des Mähdreschers im Hinblick auf einen optimalen Einklang der eingangs genannten Anforderungen angepasst wird.

Gemäß einer weiteren vorteilhaften Weiterbildung der Erfindung ist vorgesehen, dass der Kornsensor mittelbar und/oder unmittelbar an dem Dachelement und/oder an dem Abscheidekorb des Abscheideaggregats angeordnet ist.

Vorzugsweise ist hierbei vorgesehen, dass zwischen dem Kornsensor und dem Abscheiderotor des Abscheideaggregats ein Siebelement angeordnet ist.

Der zumindest eine Kornsensor ist somit nicht im Erntegutstrom im Zwischenraum zwischen Abscheiderotor und Dachelement angeordnet. Vielmehr wird das Erntegut im Zwischenraum an dem zumindest einen Kornsensor entlanggeführt, wobei die im Erntegutstrom enthaltenen Körner (Restkörner) stellenweise mittels des Kornsensor gemessen werden können.

Sofern ein Siebelement zwischen Erntegutstrom und dem zumindest einen Kornsensor angeordnet ist, wird der Erntegutstrom nicht unmittelbar an dem Kornsensor entlanggeführt, so dass ein Großteil der Nichtkornbestandteile des Erntegutstroms nicht in den Detektionsbereich des Kornsensors gelangen kann. Vielmehr gelangen die im Abscheideaggregat aufgrund der Fliehkraft vom Erntegutstrom im Zwischenraum getrennten Körner in den Detektionsbereich des Kornsensors, die von dem Kornsensor dann detektiert werden.

Gemäß einer weiteren vorteilhaften Weiterbildung der Erfindung ist vorgesehen, dass das Dachelement eine Abkantung und/oder eine Schanze aufweist und der Kornsensor im Bereich der Abkantung und/oder der Schanze angeordnet ist.

Das Ausbilden einer Abkantung und/oder Schanze im Dachelement, wodurch partiell von der im Wesentlichen zylindrischen Ausgestaltung des Gehäuses im Bereich des Dachelements abgewichen wird, und die Anordnung des zumindest einen Kornsensors im Bereich einer solchen Abkantung und/oder Schanze sorgt vorteilhaft dafür, dass der Detektionsbereich des zumindest einen Kornsensors von Nichtkornbestandteilen im Erntegutstrom freigehalten wird, indem die Größe des Zwischenraums zwischen Abscheiderotor und Dachelement lokal in Radialrichtung verändert wird. Die Genauigkeit der Messung und Bestimmung wird hierdurch erhöht, da störende Nichtkornbestandteile aus dem Detektionsbereich des Kornsensors herausgehalten werden.

Gemäß einer weiteren vorteilhaften Weiterbildung der Erfindung ist vorgesehen, dass die Abscheideeinrichtung zwei voneinander beabstandet und gegenüberliegend angeordnete Seitenwände aufweist, zwischen denen das Abscheideaggregat zumindest bereichsweise angeordnet ist, wobei die Abscheideeinrichtung einen beweglich gelagerten und antreibbaren Rücklaufboden aufweist, der unterhalb des Abscheideaggregats entlang der Längsachse des Abscheideaggregats und zwischen den beiden Seitenwänden der Abscheideeinrichtung zumindest bereichsweise angeordnet ist, und wobei der Kornsensor an zumindest einer Seitenwand und/oder an dem Rücklaufboden der Abscheideeinrichtung angeordnet ist.

Die Anordnung des zumindest einen Kornsensors an zumindest einer Seitenwand und/oder am Rücklaufboden sorgt dafür, dass der Kornsensor nicht unmittelbar im mittels des Abscheideaggregats abgeschiedenen Erntegutstrom angeordnet ist. Vielmehr werden nur die Körner detektiert, die sich in einem Randbereich des abgeschiedenen Erntegutstroms befinden. Die in diesem Bereich enthaltenen Menge an Körnern ist jedoch repräsentativ für die Menge an Körnern im gesamten abgeschiedenen Erntegutstrom. Etwaige noch im Erntegutstrom enthaltenen Nichtkornbestandteile beeinflussen den Kornsensor bzw. die Messgenauigkeit des Kornsensors somit, wenn überhaupt, nur in zu vernachlässigbarer Art und Weise.

Die Anordnung am antreibbaren Rücklaufboden bringt ferner den Vorteil mit sich, dass durch die Bewegung des Rücklaufbodens im Betrieb der Abscheideeinrichtung der Kornsensor von etwaigen Ablagerungen befreit wird, falls solche sich dennoch in geringer Menge an dem Kornsensor ablagern. Diese Ausgestaltung ist insbesondere für Getreidesorten, die zu einer erhöhten Schmutzproduktion während des Abscheideprozesses führen, als vorteilhaft anzusehen.

In diesem Zusammenhang ist es insbesondere als vorteilhaft anzusehen, dass der Kornsensor an zumindest einem an die Seitenwände der Abscheideeinrichtung angrenzenden Randabschnitt des Rücklaufbodens angeordnet ist und/oder der Rücklaufboden einen sich entlang der Längsachse des Abscheideaggregats erstreckenden und von dem Rücklaufboden in Richtung des Abscheideaggregats vorstehenden Steg aufweist, wobei der Kornsensor an dem Steg angeordnet ist.

Gemäß einer weiteren vorteilhaften Weiterbildung der Erfindung ist vorgesehen, dass die Abscheideeinrichtung eine sich entlang der Längsachse des Abscheideaggregats erstreckende Schiene aufweist, die an dem Gehäuse des Abscheideaggregats, vorzugsweise lösbar, befestigt ist, wobei der Kornsensor an der Schiene, vorzugsweise auf einem Laufwagen beweglich entlang der Schiene, angeordnet ist.

Hierdurch wird eine weitere Möglichkeit geschaffen, den Kornsensor außerhalb des Abscheideaggregats anzuordnen, so dass dieser nicht unmittelbar im mittels des Abscheideaggregats abgeschiedenen Erntegutstrom angeordnet ist. Vielmehr wird auch hier nur die Menge an Körnern gemessen, die sich in einem Randbereich des abgeschiedenen Erntegutstroms befindet. Die Anordnung auf einem Laufwagen, der auf der Schiene beweglich ist, erlaubt es mittels eines einzelnen Kornsensors nahezu jede Position entlang der Längsachse des Abscheideaggregats einzunehmen und dort die Menge an Körnern zu bestimmen.

Gemäß einer weiteren vorteilhaften Weiterbildung der Erfindung ist vorgesehen, dass eine Längserstreckung des Kornsensors in Richtung der Längsachse des Abscheideaggregats mehr als 50 % der Länge des Abscheidekorbs in Richtung der Längsachse des Abscheideaggregats beträgt.

Bei der Förderung des Erntegutstroms im Zwischenraum zwischen Abscheiderotor und Dachelement im Abscheideaggregat wird der Erntegutstrom in Form einer umlaufenden Erntegutspirale entlang der Längsachse des Abscheideaggregats gefördert, wobei lokale Minima und Maxima der Kornabscheidung auftreten. Durch die Ausgestaltung des Kornsensors mit einer Länge von mehr als 50 % des Abscheidekorbs kann nicht nur stellenweise die Menge an Körnern bestimmt werden, sondern es können auch diese lokalen Minima und Maxima bestimmt werden, die das Abscheideverhalten der Abscheideeinrichtung bzw. des Abscheideaggregats charakterisieren und damit dann ebenfalls der automatischen und/oder manuellen Einstellung des Betriebs des Mähdreschers zugrunde gelegt werden können.

Weiterhin ist erfindungsgemäß vorgesehen, dass der Kornsensor integral mit dem Gehäuse des Abscheideaggregats, mit der Seitenwand der Abscheideeinrichtung und/oder mit dem Rücklaufboden der Abscheideeinrichtung ausgebildet ist.

Diese Ausgestaltung reduziert die Gefahr eines Ablagerns bzw. Anhaftens von Körnern, Nichtkornbestandteilen oder Schmutz weiterhin in erheblichem Maße, da durch die Integration des Kornsensors, wenn überhaupt, nur leicht vorstehenden Bereiche an den die Abscheideeinrichtung ausbildenden Elementen geschaffen werden.

Gemäß einer weiteren vorteilhaften Weiterbildung der Erfindung ist vorgesehen, dass der Kornsensor als Körperschallsensor, elektromagnetischer Sensor und/oder fotoelektrischer Sensor ausgebildet ist.

Je nach Position, an der zumindest einen Kornsensors angeordnet wird, und der Art und Weise der Anbringung kann ein bestimmter Sensortyp gewählt werden, der die Genauigkeit der Bestimmung der abgeschiedenen Menge an Körnern und somit die Genauigkeit der Bestimmung der Kornverluste in der Abscheideeinrichtung maximiert.

Insbesondere dann, wenn der Kornsensor integral mit den Elementen der Abscheideeinrichtung ausgebildet wird, eignet sich die Verwendung eines elektromagnetischen Sensors, um die Bestimmungsgenauigkeit zu maximieren.

Gemäß einer weiteren vorteilhaften Weiterbildung der Erfindung ist vorgesehen, dass die Abscheideeinrichtung zwei Abscheideaggregate aufweist, die parallel zueinander angeordnet sind.

Gemäß einer weiteren vorteilhaften Weiterbildung der Erfindung ist vorgesehen, dass die Abscheideeinrichtung eine weitere Sensoreinrichtung mit zumindest einem Kornsensor aufweist, der derart innerhalb des Abscheideaggregats im Auslaufbereich des Abscheideaggregats angeordnet ist, dass eine im Erntegut im Auslaufbereich des Abscheideaggregats enthaltenen Menge an Körnern bestimmbar ist, wobei der Kornsensor der weiteren Sensoreinrichtung mit der Recheneinrichtung des Mähdreschers zur Verarbeitung der mittels des Kornsensors der weiteren Sensoreinrichtung erzeugten Messsignale verbindbar ist.

Der zumindest eine Kornsensor der weiteren Sensoreinrichtung fungiert als ein finaler Kontrollsensor, mittels dem eine Menge an Körnern (Restmenge) im Erntegutstrom im Auslaufbereich des Abscheideaggregats bestimmt werden kann, die im Normalfall aus dem Mähdrescher herausgefördert würde.

Der Mähdrescher könnte in diesem Zusammenhang eine weitere Rückführung im Bereich des Auslaufbereichs aufweisen, so dass, falls der Erntegutstrom eine noch erhebliche Menge an nicht abgeschiedenen Körnern enthält, dieser erneut zunächst dem Dreschwerk und anschließend der Abscheideeinrichtung zugeführt wird, um die Trennung weiter zu erhöhen.

Gemäß einer weiteren vorteilhaften Weiterbildung der Erfindung ist vorgesehen, dass die Abscheideeinrichtung eine statische und/oder dynamische Räumeinrichtung aufweist, die dazu eingerichtet ist, Verschmutzungen von der Sensoreinrichtung und/oder der weiteren Sensoreinrichtung zu entfernen.

Hierdurch kann der zumindest eine Kornsensor von etwaigen Ablagerungen befreit werden. Auch diese Ausgestaltung ist insbesondere für Getreidesorten, die zu einer erhöhten Schmutzproduktion während des Abscheideprozesses führen, als vorteilhaft anzusehen. Sofern eine dynamische, also eine bewegliche bzw. verfahrbare, Räumeinrichtung verwendet wird, ist diese derart innerhalb der Abscheideeinrichtung angeordnet, dass diese entlang des Kornsensors, insbesondere im Detektionsbereich des Kornsensors, geführt werden kann. Wird eine statische, also eine unbewegliche bzw. nicht verfahrbare, Räumeinrichtung verwendet, ist diese derart in der Abscheideeinrichtung angeordnet, dass der Kornsensors entlang der Räumeinrichtung bewegt wird (der Kornsensor ist beweglich angeordnet, beispielsweise mittels des Laufwagens).

Gemäß einer weiteren vorteilhaften Weiterbildung der Erfindung ist vorgesehen, dass die Sensoreinrichtung eine Vielzahl von Kornsensoren aufweist, wobei, vorzugsweise, zumindest ein Kornsensor zumindest einem Endbereich des zumindest einen Abscheidekorbs zugeordnet ist.

Die Verwendung einer Vielzahl von Kornsensoren erlaubt es einerseits eine Menge an Körnern an unterschiedlichen Positionen in der Abscheideeinrichtung zu bestimmen und somit die Genauigkeit der Bestimmung der abgeschiedenen Menge an Körnern bzw. der Kornverluste in der Abscheideeinrichtung zu erhöhen. Ferner erlaubt diese Ausgestaltung sowohl Bestimmung der abgeschiedenen Menge an Körnern entlang der Längsachse des zumindest einen Abscheideaggregats als auch über den Umfang des zumindest einen Abscheideaggregats. Hierzu müssen zumindest zwei Kornsensoren sowohl entlang der Längsachse als auch in Bezug auf den Umfang des Abscheideaggregats voneinander beabstandet angeordnet sein. Sofern eine Vielzahl von Abscheidekörben vorgesehen ist, kann besonders unkompliziert durch die Verwendung einer Vielzahl von Kornsensoren, wobei jeweils ein Kornsensor jeweils einem Abscheidekorb zugeordnet ist (dies bedeutet nicht, dass der Kornsensor am Abscheidekorb angeordnet ist, sondern die Lage der Position des Kornsensors bereichsweise mit dem Abscheidekorb zusammenfällt), eine in Bezug zu jedem Abscheidekorb stehende Menge an Körnern bestimmt werden.

Die erfindungsgemäße Aufgabe wird ferner durch einen Mähdrescher gemäß dem unabhängigen Patentanspruch 15 gelöst.

Die vorliegende Erfindung wird nachstehend anhand der in den Figuren abgebildeten Ausführungsformen näher beschrieben.

Es zeigen:
- FIG. 1:: eine schematische und exemplarische Ansicht eines erfindungsgemäßen Mähdreschers;
- FIG. 2:: eine schematische und exemplarische Ansicht einer erfindungsgemäßen Abscheideeinrichtung des erfindungsgemäßen Mähdreschers gemäß FIG. 1;
- FIG. 3:: eine schematische und exemplarische Teilseitenansicht der erfindungsgemäßen Abscheideeinrichtung gemäß FIG. 2; und
- FIGs. 4a bis 4c:: schematische und exemplarische Darstellungen von Ausführungsformen der erfindungsgemäßen Abscheideeinrichtung gemäß FIG. 2.

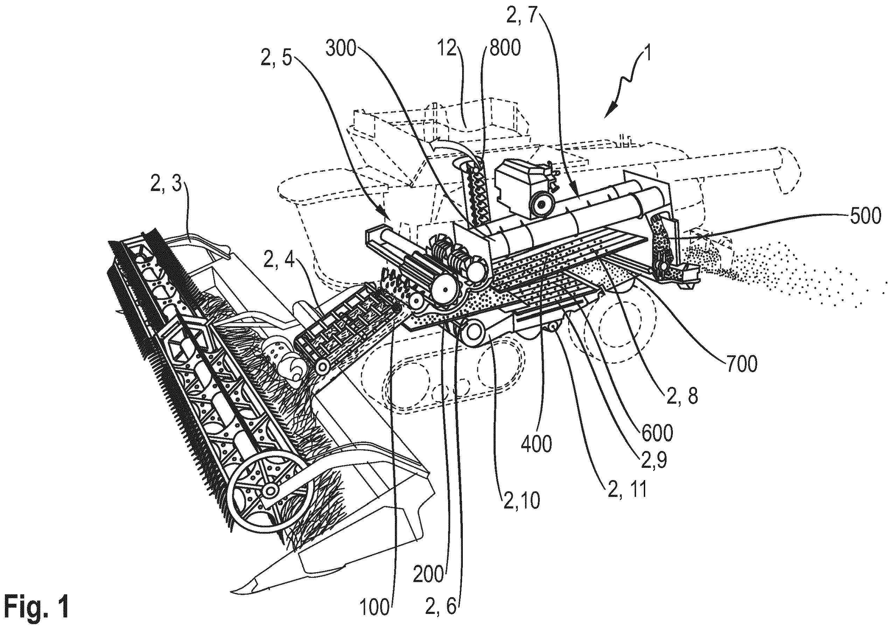

FIG. 1 zeigt eine schematische und exemplarische Darstellung eines erfindungsgemäßen Mähdreschers, der eine selbstfahrende landwirtschaftliche Arbeitsmaschine darstellt. Der Mähdrescher 1 weist eine Vielzahl von Arbeitsorganen 2 auf, die der Förderung und/oder Verarbeitung eines Ernteguts dient.

Das Erntegut wird mittels eines Vorsatzgeräts 3 des Mähdreschers 1 aufgenommen und in Form eines ersten Erntegutstroms 100 mittels eines Schrägförderers 4 des Mähdreschers 1 zu einem Dreschwerk 5 des Mähdreschers 1 gefördert. Das Dreschwerk 5, das eine Vielzahl von Dreschorganen aufweist, die von einem Dreschkorb umgeben sind, sorgt dafür, dass eine erste Abscheidung von Körnern aus dem ersten Erntegutstrom 100 in Form eines zweiten Erntegutstroms 200 erfolgt. Der zweite Erntegutstrom 200 wird auf einen Vorbereitungsboden 6 abgeschieden.

Nach Durchlaufen des Dreschwerks 5 wird ein aus diesem austretender dritter Erntegutstrom 300 einer Abscheideeinrichtung 7 zugeführt. Die im dritten Erntegutstrom 300 noch enthaltenen, freibeweglichen Körner werden mittels der Abscheideeinrichtung 7 in Form eines vierten Erntegutstroms 400 auf einen Rücklaufboden 8 abgeschieden und anschließend dem Vorbereitungsboden 6 zugeführt. Ein verbleibender fünfter Erntegutstrom 500, der hauptsächlich aus Nichtkornbestandteilen, wie Spreu, Halmteilen, etc., besteht, wird aus dem Mähdrescher 1 herausgefördert, wobei dieser vorher eine Zerkleinerungseinrichtung durchläuft.

Der zweite Erntegutstrom 200 und der vierte Erntegutstrom 400 werden über den Vorbereitungsboden 6 und den Rücklaufboden 8 zu einem sechsten Erntegutstrom 600 zusammengeführt, der einer aus mehreren Siebenebenen bestehenden Siebeinrichtung 9 sowie einer ein Gebläse umfassenden Reinigungseinrichtung 10 zugeführt wird. Der sechste Erntegutstrom 600 wird in diesen Einrichtungen 9, 10 gereinigt, indem noch im Erntegutstrom 600 enthaltenen Nichtkornbestandteile aus dem Erntegutstrom 600 entfernt werden. Diese entfernten Nichtkornbestandteile werden in Form eines siebten Erntegutstroms 700 aus dem Mähdrescher 1 herausgefördert.

Der Mähdrescher 1 weist ferner eine Überkehrschnecke 11 auf, die dazu eingerichtet ist, einen mittels der Siebeinrichtung 9 und der Reinigungseinrichtung 10 erzeugten achten Erntegutstrom, der in FIG. 1 nicht explizit dargestellt ist und der noch nicht ausgedroschene Körner enthalten kann, erneut dem Dreschwerk 5 zuzuführen.

Ein ebenfalls mittels der Siebeinrichtung 9 und der Reinigungseinrichtung 10 erzeugter neunter Erntegutstrom 900, auch als gereinigter Körnerstrom bezeichnet, wird einem Korntank 12 des Mähdreschers 1 zugeführt. Die in FIG. 1 abgebildeten und zuvor beschriebenen Erntegutströme 100 bis 900 sind nicht abschließend zu verstehen und hängen von der technischen Ausgestaltung des Mähdreschers 1 ab.

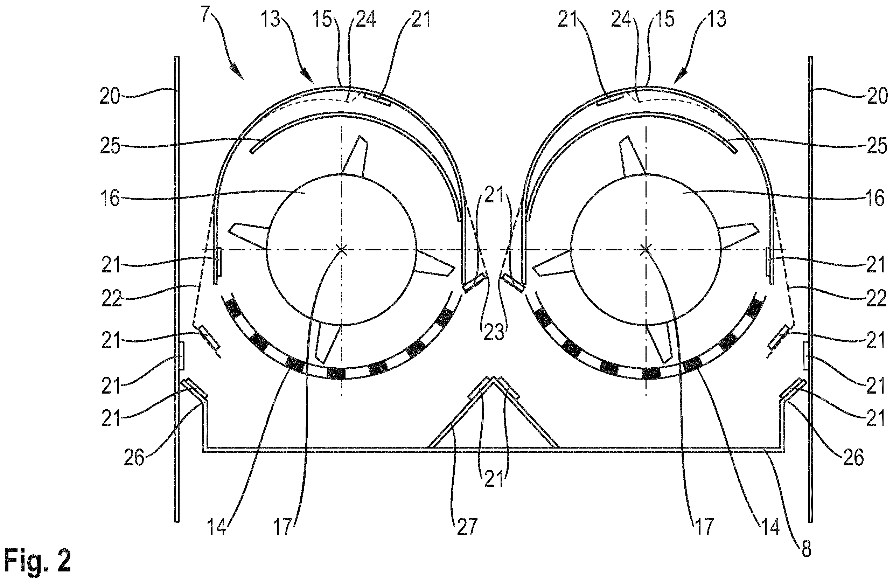

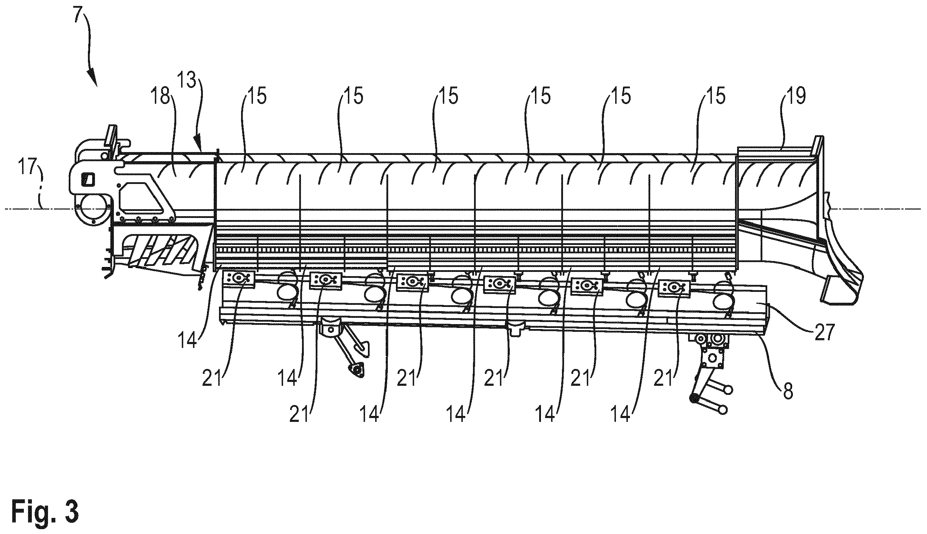

Bezugnehmend auf die FIGs. 2 bis 4c wird im Folgenden die Ausgestaltung der erfindungsgemäßen Abscheideeinrichtung 7 des erfindungsgemäßen Mähdreschers 1 im Detail beschrieben. Die FIGs. 2 und 3 zeigen in diesem Zusammenhang jeweils schematische und exemplarische Ansichten der erfindungsgemäßen Abscheideeinrichtung 7, wobei FIG. 2 eine geschnittene Ansicht der Abscheideeinrichtung 7 und FIG. 3 eine Teilseitenansicht der Abscheideeinrichtung 7 darstellt, bei der einzelne Teilelemente der Abscheideeinrichtung 7 der Übersichtlichkeit halber weggelassen wurden.

Die erfindungsgemäße Abscheideeinrichtung 7 weist zumindest ein nach dem Axialflussprinzip arbeitendes Abscheideaggregat 13 auf, das zumindest einen Abscheidekorb 14 und zumindest ein an dem zumindest einen Abscheidekorb 14 befestigtes Dachelement 15 aufweist. Der Abscheidekorb 14 und das daran befestigte Dachelement 15 bilden gemeinsam ein zumindest im Wesentlichen hohlzylindrisches Gehäuse des Abscheideaggregats 13 aus. In dem Gehäuse des Abscheideaggregats 13 ist ein Abscheiderotor 16 angeordnet, der drehbar um eine Längsachse 17 des Abscheideaggregats 13 gelagert in dem Gehäuse des Abscheideaggregats 13 aufgenommen ist. Das Gehäuse und der Abscheiderotor 16 bilden gemeinsam zwischen sich einen Zwischenraum aus, in dem der dritte Erntegutstrom 300 umfänglich und entlang der Längsachse 17 des Abscheideaggregats 13 in Form einer Gutspirale gefördert wird. Das Abscheideaggregat 13 weist einen Einlaufbereich 18 auf, der in Erntegutstromrichtung dem Dreschwerk 5 unmittelbar nachgeschaltet und somit dem Abscheidekorb 14 vorgeschaltet ist. Der aus dem Dreschwerk 5 austretende dritte Erntegutstrom 300 tritt somit über den Einlaufbereich 18 des Abscheideaggregats 13 in die Abscheideeinrichtung 7 ein. Ferner weist das Abscheideaggregat 13 einen Auslaufbereich 19 auf, der in Erntegutstromrichtung dem Abscheidekorb 14 nachgeschaltet ist. Mittels des Auslaufbereichs 19 wird der dritte Erntegutstrom 300 einer Einrichtung zugeführt, die dazu eingerichtet ist, den dann als fünften Erntegutstrom 500 bezeichneten Erntegutstrom aus dem Mähdrescher 1 herauszufördern.

Das Abscheideaggregat 13 ist von zwei voneinander quer zur Längsachse 17 des Abscheideaggregats 13 beabstandeten und einander gegenüberliegenden Seitenwänden 20 zumindest bereichsweise umgeben. Die Seitenwände 20 erstrecken sich entlang der Längsachse 17 des Abscheideaggregats 13 und definieren eine seitliche Begrenzung der Abscheideeinrichtung 7. Zumindest bereichsweise ist in diesem Kontext derart zu verstehen, dass die Seitenwände 20 zumindest den Abscheidekorb 14 und das daran befestigte Dachelement 15 seitlich umgeben. Die Seitenwände 20 können jedoch auch das gesamte Arbeitsaggregat 13, also auch den Einlaufbereich 18 und den Auslaufbereich 19, seitlich umgeben. Zwischen den Seitenwänden 20 und unterhalb des Abscheideaggregats 13 ist der Rücklaufboden 8 zumindest bereichsweise angeordnet. Zumindest bereichsweise ist in diesem Kontext derart zu verstehen, dass der Rücklaufboden 8 zumindest unterhalb des Abscheidekorbs 14 und des daran befestigten Dachelements 15 zwischen den Seitenwänden 20 angeordnet ist. Der Rücklaufboden 8 kann jedoch auch unterhalb des gesamten Arbeitsaggregats 13, also auch dem Einlaufbereich 18, angeordnet sein, mit Ausnahme des Auslaufbereichs 19. Der Rücklaufboden 8 ist im Mähdrescher 1 beweglich gelagert angeordnet und antreibbar, beispielsweise über einen Hauptantrieb des Mähdreschers 1 oder einen zusätzlichen Antrieb, um den vierten Erntegutstrom 400 dem Vorbereitungsboden 6 zuzuführen.

In den FIGs. 2 bis 4c sind jeweils immer zwei Arbeitsaggregate 13 dargestellt, die jeweils wie zuvor beschrieben ausgestaltet sind. Die beiden Arbeitsaggregate 13 sind quer zur Längsachse 17 des Abscheideaggregats 13 beabstandet und parallel zueinander zwischen den Seitenwänden 20 angeordnet. Der Rücklaufboden 8 ist bei einer solchen Ausgestaltung zumindest bereichsweise unterhalb beider Abscheideaggregate 13 und zwischen den Seitenwänden 20 angeordnet. Zumindest bereichsweise ist in diesem Zusammenhang wie zuvor beschrieben zu verstehen. Es ist jedoch erfindungsgemäß genauso möglich, dass die Abscheideeinrichtung 7 nur ein solches Abscheideaggregat 13 aufweist, dass dann zwischen den Seitenwänden 20 angeordnet ist.

Die erfindungsgemäße Abscheideeinrichtung 7 weist eine Sensoreinrichtung mit zumindest einem Kornsensor 21 auf. Mittels des Kornsensors 21 ist eine mittels des Abscheideaggregats 13 abgeschiedene Menge an Körnern, also eine aus dem dritten Erntegutstrom 300 abgeschiedene Menge an Körnern, und/oder eine in dem im Zwischenraum geförderten Erntegut, also in dem dritten Erntegutstrom 300, enthaltene Menge an Körnern (Restkornmenge) zumindest entlang der Längsachse 17 des Abscheideaggregats 13 von einem Einlaufbereich 18 bis zu einem Auslaufbereich 19 des Abscheideaggregats 13 stellenweise bestimmbar. Charakteristisch für die erfindungsgemäße Abscheideeinrichtung ist hierbei, dass der Kornsensor 21 stets derart innerhalb und/oder außerhalb des Abscheideaggregats 13 angeordnet ist, dass die Bestimmung der Menge an Körnern vorgenommen werden kann, ohne hierbei den Erntegutstrom innerhalb und außerhalb des Gehäuses des Abscheideaggregats 13, gebildet durch den Abscheidekorb 14 und das daran befestigte Dachelement 15, zu beeinträchtigen.

Wie eingangs angegeben ist hierunter zu verstehen, dass der zumindest eine Kornsensor 21 derart innerhalb der Abscheideeinrichtung 7 angeordnet ist, dass zuverlässig eine Menge an Körnern bestimmt werden kann, die Erntegutströme 300, 400 innerhalb der Abscheideeinrichtung 7 jedoch unbeeinträchtigt bleiben. Beeinträchtigen bedeutet in diesem Zusammenhang, dass der Kornsensor 21 innerhalb der Abscheideeinrichtung 7 derart in Bezug auf die Erntegutströme 300, 400 angeordnet ist, dass sich das Fließverhalten des jeweiligen Erntegutstroms 300, 400 nahezu so verhält, als wäre kein Kornsensor in der Abscheideeinrichtung 7 angeordnet. Der Begriff "nahezu" bedeutet in diesem Zusammenhang, dass zu vernachlässigende Abweichungen, die die Fließverhalten der Erntegutströme 300, 400 nicht beeinflussen, zulässig sind. Insbesondere werden durch die erfindungsgemäße Anordnung des Kornsensors 21 Stauungen in den Erntegutströmen 300, 400, Ansammlung von Erntegutbestandteilen aus den Erntegutströmen 300, 400 an dem Sensor 21, eine ungünstige Ablenkung der Erntegutströme 300, 400 und eine ungünstige Verteilung der Erntegutströme 300, 400 innerhalb und/oder außerhalb des Abscheideaggregats 13 vermieden.

FIG. 2 stellt die erfindungsgemäße Abscheideeinrichtung 7 mit der Sensoreinrichtung, die zumindest einen Kornsensor 21 aufweist, dar, wobei der Kornsensor 21 immer derart innerhalb und/oder außerhalb des zumindest einen Abscheideaggregats 13 angeordnet ist, dass die Bestimmung der Menge an Körnern erfolgen kann, ohne hierbei den Erntegutstrom 300, 400 innerhalb und außerhalb des Gehäuses des Abscheideaggregats 13 zu beeinträchtigen. In FIG. 2 ist eine Vielzahl von möglichen Positionen für die Anordnung des zumindest einen Kornsensors 21 darstellt. Die Darstellung gemäß FIG. 2 ist so zu verstehen, dass der Kornsensor 21 an jeder der abgebildeten Positionen angeordnet werden kann, jedoch nicht so, dass an jeder dieser Positionen ein Kornsensor 21 angeordnet sein muss. Sofern mehrere Kornsensoren 21 Verwendung finden, können diese aber durchaus so angeordnet werden, dass an verschiedenen der abgebildeten Positionen Kornsensoren 21 angeordnet sind.

Wie in FIG. 2 zu sehen, gibt es eine Vielzahl von Positionen in der Abscheideeinrichtung 7, an der der zumindest eine Kornsensor 21 angeordnet werden kann, so dass ein Erntegutstrom 300, 400 nicht beeinträchtigt wird, die Bestimmung der Menge an Körnern jedoch zuverlässig erfolgen kann.

Im Einzelnen kann der zumindest eine Kornsensor 21 an dem Dachelement 15 des Abscheideaggregats 13 angeordnet werden. Die Anordnung am Dachelement 15 kann hierbei derart erfolgen, dass der Kornsensor 21 unmittelbar am Dachelement 15 und/oder mittelbar am Dachelement 15 angeordnet ist. Unmittelbar am Dachelement 15 angeordnet ist in diesem Zusammenhang so zu verstehen, dass der Kornsensor 21 direkt an dem Dachelement 15 angeordnet ist und zwar derart, dass der Kornsensor 21 in Richtung des Zwischenraums zwischen Abscheiderotor 16 und Dachelement 15 weist. Mittelbar am Dachelement 15 angeordnet ist hingegen so zu verstehen, dass der Kornsensor 21 nicht direkt an dem Dachelement 15 angeordnet ist, sondern an einem Element 22, das an dem Dachelement 15 befestigt wird. Die Lage des Kornsensors 21 ist hierbei, also bei der mittelbaren Anordnung, so gewählt, dass dieser sich auf Höhe des Abscheidekorbs 14 des Abscheideaggregats 13 befindet.

Bei einer Anordnung des Kornsensors 21 am Dachelement 15 kann besagtes Dachelement 15 verschiedenartig ausgestaltet sein. Wie in FIG. 2 dargestellt, ist das Gehäuse des Abscheideaggregats 13 im Wesentlichen hohlzylindrisch ausgestaltet (durchgezogene Linie). Das Dachelement 15 kann aber auch eine sogenannte Abkantung 23 und/oder eine sogenannte Schanze 24 (jeweils strichpunktiert dargestellt) aufweisen. Eine Abkantung 23 im Dachelement 15 zeichnet sich dadurch aus, dass das Gehäuse in einem Bereich des Dachelements 15 von seiner im Wesentlichen zylindrischen Form abweicht, wodurch der Zwischenraum zwischen Abscheiderotor 16 und Dachelement 15 in diesem Bereich vergrößert wird. Eine Schanze 24 im Dachelement 15 zeichnet sich dadurch aus, dass das Gehäuse in einem Bereich des Dachelements 15 von seiner im Wesentlichen zylindrischen Form abweicht, wodurch der Zwischenraum zwischen Abscheiderotor 16 und Dachelement 15 in diesem Bereich verringert wird. Der Kornsensor 21 kann, wie in FIG. 2 ersichtlich, sofern eine Abkantung 23 und/oder Schanze 24 ausgebildet ist, im Bereich der Abkantung 23 und/oder im Bereich der Schanze 24 angeordnet sein.

Gemäß einer Ausgestaltung kann zwischen dem Abscheiderotor 16 des Abscheideaggregats 13 und dem am Dachelement 15 angeordneten Kornsensor 21 ein Siebelement 25 angeordnet sein, beispielsweise ein Siebrechen, ein Lochblech oder dergleichen.

Der zumindest eine Kornsensor 21 kann auch an zumindest einer Seitenwand 20 der Abscheideeinrichtung 7 angeordnet sein. Hierbei ist es vorzugsweise so, dass der Kornsensor 21 in einem Bereich der Seitenwand 20 angeordnet ist, der auf Höhe des Abscheidekorbs 14 liegt.

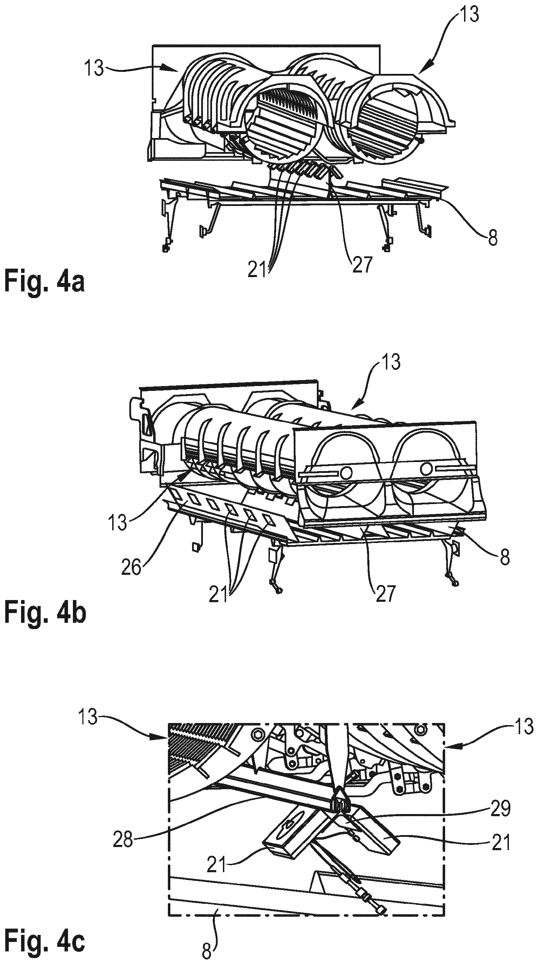

Auch kann der zumindest eine Kornsensor 21 am Rücklaufboden 8 angeordnet sein. Der Kornsensor 21 kann beispielsweise in einem an die Seitenwände 20 angrenzenden Randabschnitt 26 des Rücklaufbodens 8 angeordnet sein. Es ist aber auch möglich, den Kornsensor 21 an einem Steg 27 des Rücklaufbodens 8 anzuordnen, welcher in den FIGs. 2, 4a und 4b dargestellt ist. Dieser Steg 27 erstreckt sich entlang der Längsachse 17 des Abscheideaggregats 13 am Rücklaufboden 8 und steht von dem Rücklaufboden 8 in Richtung des Abscheideaggregats 13 vor. Sofern zwei Abscheideaggregate 13 verwendet werden, ist dieser Steg 27 in einem Bereich am Rücklaufboden 8 angeordnet, der sich zwischen beiden Abscheideaggregaten 13 befindet. Sofern nur ein Abscheideaggregat 13 verwendet wird, ist der Steg 27 vorzugsweise im Randbereich, beispielsweise am Randabschnitt 26, des Rücklaufbodens 8 ausgebildet. Der Steg 27 kann, wie in den FIGs. 2 und 4b dargestellt, eine umgekehrt V-förmige Ausgestaltung aufweisen. Andere Ausgestaltungen des Stegs 27 sind ebenfalls möglich. Hierzu sei auf die FIGs. 3 und 4a verwiesen, die als eine weitere alternative Ausgestaltungsvariante eine umgekehrt Y-förmige Ausgestaltung zeigt.

Gemäß einer weiteren Ausgestaltung, die in FIG. 4c dargestellt ist, kann die erfindungsgemäße Abscheideeinrichtung 7 eine sich entlang der Längsachse 17 des Abscheideaggregats 13 erstreckende Schiene 28 umfassen. Diese Schiene 28 ist am Gehäuse, vorzugsweise am Dachelement 15, des Abscheideaggregats 13, vorzugsweise lösbar, befestigt. Der zumindest eine Kornsensor 21 der Sensoreinrichtung kann an der Schiene 28 angeordnet sein. In diesem Zusammenhang ist es gemäß einer Ausgestaltung so, dass an der Schiene 28 ein Laufwagen 29 angeordnet ist, der beweglich entlang der Schiene 28 gelagert und antreibbar ist, so dass sich dieser entlang der Schiene 28 bewegen kann. Der zumindest eine Kornsensor 21 kann an diesem Laufwagen 29 angeordnet sein, so dass dieser sich mit dem Laufwagen 29 entlang der Schiene 28 bewegen kann.

Bei jeder der zuvor beschriebenen Anordnungsvarianten des zumindest einen Kornsensors 21 ist es möglich, den Kornsensor 21 integral mit dem entsprechenden Bauteil, also dem Gehäuse des Abscheideaggregats 13, der Seitenwand 20 der Abscheideeinrichtung 7 und/oder dem Rücklaufboden 8 der Abscheideeinrichtung 7, auszubilden oder aber den Kornsensor 21 an diesen Bauteilen form-, kraft- und/oder stoffschlüssig zu befestigen.

Der zumindest eine Kornsensor 21 der Sensoreinrichtung kann als Körperschallsensor, elektromagnetsicher Sensor und/oder fotoelektrischer Sensor ausgebildet sein. Insbesondere dann, wenn der Kornsensor 21 integral mit einem Bauteil ausgebildet ist, eignet sich die Verwendung von elektromagnetischen Sensoren in besonderem Maße.

Wie eingangs beschrieben, wird bei jeder der zuvor beschriebenen Anordnungsvarianten des zumindest einen Kornsensors 21 die Bedingung erfüllt, dass eine Menge an Körner stellenweise bestimmbar ist, ein Erntegutstrom 300, 400 in der Abscheideeinrichtung 7 jedoch nicht beeinträchtigt wird. Die Bestimmung der Menge an Körnern kann mittels eines einzigen Kornsensors 21 vorgenommen werden oder aber auch mittels einer Vielzahl von Kornsensoren 21 (eine Vielzahl schließt zwei Kornsensoren 21 ein). Sofern ein Kornsensor 21 verwendet wird, erstreckt sich dieser vorzugsweise im Wesentlichen über die gesamte Länge des Abscheideaggregats 13 entlang der Längsachse 17 des Abscheideaggregats 13 oder ist über den Laufwagen 29 der Schiene 29 entlang der Längsachse 17 des Abscheideaggregats 13 bewegbar. Sofern mehrere Kornsensoren 21 verwendet werden, sind diese entlang der Längsachse 17 des Abscheideaggregats 13 hintereinander und beabstandet zueinander angeordnet, wie in den FIGs. 3 bis 4c dargestellt. Sofern eine Vielzahl von Abscheidekörben 14 (eine Vielzahl schließt zwei Abscheidekörbe 14 ein) vorgesehen sind, kann bei einer Vielzahl von Kornsensoren 21 jeweils ein Kornsensor 21 jeweils einem Abscheidekorb 14 zugeordnet sein (siehe insbesondere FIG. 3). Es können auch zwei Kornsensoren 21 jedem Abscheidekorb 14 zugeordnet sein und zwar unabhängig davon, ob nur ein Abscheidekorb 14 oder mehrere Abscheidekörbe 14 vorgesehen sind. Bei einer Vielzahl von Kornsensoren 21 ist vorzugsweise zumindest ein Kornsensor 21 zumindest einem Endbereich des Abscheidekorbs 14, vorzugsweise jeweils ein Kornsensor 21 jeweils einem Endbereich des Abscheidekorbs 14, zugeordnet. Wie bereits angedeutet, können auch mehrere Kornsensoren 21 an verschiedenen der zuvor beschriebenen und FIG. 2 abgebildeten Positionen angeordnet sein. Sofern jedem Endbereich des Abscheidekorbs 14 ein Kornsensor 21 zugeordnet ist und diese Kornsensoren 21 in Umfangsrichtung des Abscheideaggregats 13 ferner an unterschiedlichen Positionen angeordnet sind, kann nicht nur die Menge an Körnern entlang der Längsachse 17 des Abscheideaggregats 13 bestimmt werden, sondern auch eine Menge an Körnern in Umfangsrichtung des Abscheideaggregats 13.

Unabhängig von der genauen Anordnung des Kornsensors 21 am Abscheideaggregat 13, an den Seitenwänden 20 und/oder dem Rücklaufboden 8, ist es gemäß einer Ausgestaltung vorgesehen, dass eine Längserstreckung des Kornsensors 21, also eine Erstreckung in Richtung bzw. entlang der Längsachse 17 des Abscheideaggregats 13 mehr als 50 % der Länge des Abscheidekorbs 14 in Richtung bzw. entlang der Längsachse 17 des Abscheideaggregats 13 entspricht bzw. beträgt. Bei mehreren Abscheidekörben 14 und mehreren Kornsensoren 21 kann jeder der Kornsensoren 21 diese Ausgestaltung annehmen.

Der zumindest eine Kornsensor 21 der Sensoreinrichtung ist mit einer in den FIGs. nicht dargestellten Recheneinrichtung des Mähdreschers 1 in datenübertragenderweise verbindbar bzw. verbunden, so dass die mittels des zumindest einen Kornsensors 21 erzeugten Messsignale an die Recheneinrichtung übertragen werden können, aus denen dann die Menge an Körnern bestimmt werden kann. Anhand der stellenweisen Bestimmung der abgeschiedenen Menge an Körnern kann mittels der Recheneinrichtung eine Funktion der Kornabscheidung entlang der Längsachse 17 des Abscheideaggregats 13 bestimmt werden, auf Grundlage der eine sogenannte Kornabscheidekennlinie erzeugt werden kann. Diese Kornabscheidekennlinie kann mittels einer in den FIGs. nicht dargestellten Anzeigeeinrichtung einem Benutzer des Mähdreschers 1 angezeigt werden. Die Recheneinrichtung kann die Funktion der Kornabscheidung weiterverarbeiten, so dass die Kornverluste der Abscheideeinrichtung 7 bzw. des Abscheideaggregats 13 bestimmt, jedoch zumindest angenähert werden können. Unter Kornverlusten ist hierbei die Menge an Körnern zu verstehen, die in der Abscheideeinrichtung 7 nicht aus dem dritten Erntegutstrom 300 abgeschieden wird, sondern noch im fünften Erntegutstrom 500 enthalten ist und aus dem Mähdrescher 1 hinausgefördert wird. Für die Verarbeitung der Messsignale kann die Recheneinrichtung zumindest einen Speicher und zumindest einen Prozessor umfassen. Die berechneten Werte/Parameter können dem Benutzer ebenfalls über die Anzeigeeinrichtung angezeigt werden, so dass dieser Betriebsparameter des Mähdreschers 1 und/oder der Abscheideverhalten der Abscheideeinrichtung 7 einstellen kann. Eine solche Einstellung kann auch von der Recheneinrichtung des Mähdreschers auf Grundlage der vom Kornsensor 21 erzeugten Messsignale und den hieraus bestimmten Werte/Parameter vollautomatisch vorgenommen werden.

Gemäß einer weiteren Ausgestaltung der erfindungsgemäßen Abscheideeinrichtung 7 kann eine weitere Sensoreinrichtung mit zumindest einem Kornsensor vorgesehen sein. Der Kornsensor ist derart innerhalb des Abscheideaggregats 13 im Auslaufbereich 19 des Abscheideaggregats 13 angeordnet, dass die im dritten Erntegutstrom 300 im Auslaufbereich 19 des zumindest einen Abscheideaggregats 13 enthaltenen Menge an Körnern (Restkornmenge im Auslaufbereich 19) bestimmbar ist, wobei der Kornsensor der weiteren Sensoreinrichtung mit der Recheneinrichtung des Mähdreschers 1 zur Verarbeitung der mittels des Kornsensors der weiteren Sensoreinrichtung erzeugten Messsignale verbindbar ist.

Die erfindungsgemäße Abscheideeinrichtung 7 kann eine in den FIGs. nicht dargestellte Räumeinrichtung umfassen. Je nach Ausgestaltung kann diese Räumeinrichtung feststehend (statisch) oder innerhalb der Abscheideeinrichtung 7 beweglich und antreibbar (dynamisch) ausgebildet sein. Die Räumeinrichtung ist dazu eingerichtet, etwaige Verschmutzungen von dem zumindest einen Kornsensor 21 der Sensoreinrichtung und/oder dem zumindest einem Kornsensor der weiteren Sensoreinrichtung zu entfernen. Sofern Kornsensoren 21 am Rücklaufboden 8 angeordnet sind, werden diese Kornsensoren 21 durch die Bewegung des Rücklaufbodens 8 während des Betriebs des Mähdreschers 1 bereits gereinigt. Nichtsdestotrotz kann die Räumeinrichtung auch solche Kornsensoren 21 reinigen.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

1 Mähdrescher
2 Arbeitsorgan
3 Vorsatzgerät
4 Schrägförderer
5 Dreschwerk
6 Vorbereitungsboden
7 Abscheideeinrichtung
8 Rücklaufboden
9 Siebeinrichtung
10 Reinigungseinrichtung
11 Überkehrschnecke
12 Korntank
13 Abscheideaggregat
14 Abscheidekorb
15 Dachelement
16 Abscheiderotor
17 Längsachse des Abscheideaggregats
18 Einlaufbereich des Abscheideaggregats
19 Auslaufbereich des Abscheideaggregats
20 Seitenwand der Abscheideeinrichtung
21 Kornsensor
22 Befestigungselement
23 Abkantung
24 Schanze
25 Siebelement
26 Randabschnitt des Rücklaufbodens
27 Steg des Rücklaufbodens
28 Schiene
29 Laufwagen

100 erster Erntegutstrom
200 zweiter Erntegutstrom
300 dritter Erntegutstrom
400 vierter Erntegutstrom
500 fünfter Erntegutstrom
600 sechster Erntegutstrom
700 siebter Erntegutstrom
900 neunter Erntegutstrom

## Patentansprüche

1. Abscheideeinrichtung (7) für einen Mähdrescher (1) mit zumindest einem nach dem Axialflussprinzip arbeitenden Abscheideaggregat (13), das zumindest einen Abscheidekorb (14) und zumindest ein daran befestigtes Dachelement (15) aufweist, die gemeinsam ein im Wesentlichen hohlzylinderförmiges Gehäuse des Abscheideaggregats (13) ausbilden, mit einem Abscheiderotor (16), der drehbar gelagert in dem Gehäuse des Abscheideaggregats (13) aufgenommen ist, so dass zwischen dem Gehäuse des Abscheideaggregats (13) und dem Abscheiderotor (16) ein Zwischenraum zum Fördern von Erntegut umfänglich und entlang einer Längsachse (17) des Abscheideaggregats (13) definiert ist, und mit einer Sensoreinrichtung mit zumindest einem Kornsensor (21), wobei der Kornsensor (21) mit einer Recheneinrichtung des Mähdreschers (1) zur Verarbeitung der mittels des Kornsensors (21) erzeugbaren Messsignale verbindbar ist,
**dadurch gekennzeichnet, dass**
der Kornsensor (21) derart innerhalb und/oder außerhalb des Abscheideaggregats (13) angeordnet ist, dass eine mittels des Abscheideaggregats (13) abgeschiedene Menge an Körnern und/oder eine in dem im Zwischenraum geförderten Erntegut enthaltene Menge an Körnern zumindest entlang der Längsachse (17) des Abscheideaggregats (13) von einem Einlaufbereich (18) bis zu einem Auslaufbereich (19) des Abscheideaggregats (13) stellenweise bestimmbar ist, ohne hierbei den Erntegutstrom innerhalb und außerhalb des Gehäuses des Abscheideaggregats (13) zu beeinträchtigen.

2. Abscheideeinrichtung (7) nach Anspruch 1, **dadurch gekennzeichnet, dass** mittels der Recheneinrichtung anhand der stellenweise bestimmbaren abgeschiedenen Menge an Körnern eine Kornabscheidekennlinie erzeugbar ist.

3. Abscheideeinrichtung (7) nach Anspruch 1 oder 2, **dadurch gekennzeichnet, dass** der Kornsensor (21) mittelbar und/oder unmittelbar an dem Dachelement (15) und/oder an dem Abscheidekorb (14) des Abscheideaggregats (13) angeordnet ist, wobei, vorzugsweise, zwischen dem Kornsensor (21) und dem Abscheiderotor (16) des Abscheideaggregats (13) ein Siebelement (25) angeordnet ist.

4. Abscheideeinrichtung (7) nach Anspruch 3, **dadurch gekennzeichnet, dass** das Dachelement (15) eine Abkantung (23) und/oder eine Schanze (24) aufweist und der Kornsensor (21) im Bereich der Abkantung (23) und/oder der Schanze (24) angeordnet ist.

5. Abscheideeinrichtung (7) nach einem der Ansprüche 1 bis 4, **dadurch gekennzeichnet, dass** die Abscheideeinrichtung (7) zwei voneinander beabstandet und gegenüberliegend angeordnete Seitenwände (20) aufweist, zwischen denen das Abscheideaggregat (13) zumindest bereichsweise angeordnet ist, wobei die Abscheideeinrichtung (7) einen beweglich gelagerten und antreibbaren Rücklaufboden (8) aufweist, der unterhalb des Abscheideaggregats (13) entlang der Längsachse (17) des Abscheideaggregats (13) und zwischen den beiden Seitenwänden (20) der Abscheideeinrichtung (7) zumindest bereichsweise angeordnet ist, und wobei der Kornsensor (21) an zumindest einer Seitenwand (20) und/oder an dem Rücklaufboden (8) der Abscheideeinrichtung (7) angeordnet ist.

6. Abscheideeinrichtung (7) nach Anspruch 5, **dadurch gekennzeichnet, dass** der Kornsensor (21) an zumindest einem an die Seitenwände (20) der Abscheideeinrichtung (7) angrenzenden Randabschnitt (26) des Rücklaufbodens (8) angeordnet ist; und/oder
der Rücklaufboden (8) einen sich entlang der Längsachse (17) des Abscheideaggregats (13) erstreckenden und von dem Rücklaufboden (8) in Richtung des Abscheideaggregats (13) vorstehenden Steg (27) aufweist, wobei der Kornsensor (21) an dem Steg (27) angeordnet ist.

7. Abscheideeinrichtung (7) nach einem der Ansprüche 1 bis 6, **dadurch gekennzeichnet, dass** die Abscheideeinrichtung (7) eine sich entlang der Längsachse (17) des Abscheideaggregats (13) erstreckende Schiene (28) aufweist, die an dem Gehäuse des Abscheideaggregats (13), vorzugsweise lösbar, befestigt ist, wobei der Kornsensor (21) an der Schiene (28), vorzugsweise auf einem Laufwagen (29) beweglich entlang der Schiene (28), angeordnet ist.

8. Abscheideeinrichtung (7) nach einem der Ansprüche 1 bis 7, **dadurch gekennzeichnet, dass** eine Längserstreckung des Kornsensors (21) in Richtung der Längsachse (17) des Abscheideaggregats (13) mehr als 50 % der Länge des Abscheidekorbs (14) in Richtung der Längsachse (17) des Abscheideaggregats (13) beträgt.

9. Abscheideeinrichtung (7) nach einem der Ansprüche 1 bis 8, **dadurch gekennzeichnet, dass** der Kornsensor (21) integral mit dem Gehäuse des Abscheideaggregats (13), mit der Seitenwand (20) der Abscheideeinrichtung (7) und/oder mit dem Rücklaufboden (8) der Abscheideeinrichtung (7) ausgebildet ist.

10. Abscheideeinrichtung (7) nach einem der Ansprüche 1 bis 9, **dadurch gekennzeichnet, dass** der Kornsensor (21) als Körperschallsensor, elektromagnetischer Sensor und/oder fotoelektrischer Sensor ausgebildet ist.

11. Abscheideeinrichtung (7) nach einem der Ansprüche 1 bis 10, **dadurch gekennzeichnet, dass** die Abscheideeinrichtung (7) zwei Abscheideaggregate (13) aufweist, die parallel zueinander angeordnet sind.

12. Abscheideeinrichtung (7) nach einem der Ansprüche 1 bis 11, **dadurch gekennzeichnet, dass** die Abscheideeinrichtung (7) eine weitere Sensoreinrichtung mit zumindest einem Kornsensor aufweist, der derart innerhalb des Abscheideaggregats (13) im Auslaufbereich (19) des Abscheideaggregats (13) angeordnet ist, dass eine im Erntegut im Auslaufbereich (19) des Abscheideaggregats (13) enthaltenen Menge an Körnern bestimmbar ist, wobei der Kornsensor der weiteren Sensoreinrichtung mit der Recheneinrichtung des Mähdreschers (1) zur Verarbeitung der mittels des Kornsensors der weiteren Sensoreinrichtung erzeugten Messsignale verbindbar ist.

13. Abscheideeinrichtung (7) nach einem der Ansprüche 1 bis 12, **dadurch gekennzeichnet, dass** die Abscheideeinrichtung (7) eine statische und/oder dynamische Räumeinrichtung aufweist, die dazu eingerichtet ist, Verschmutzungen von der Sensoreinrichtung und/oder der weiteren Sensoreinrichtung zu entfernen.

14. Abscheideeinrichtung (7) nach einem der Ansprüche 1 bis 13, **dadurch gekennzeichnet, dass** die Sensoreinrichtung eine Vielzahl von Kornsensoren (21) aufweist, wobei, vorzugsweise, zumindest ein Kornsensor (21) zumindest einem Endbereich des zumindest einen Abscheidekorbs (14) zugeordnet ist.

15. Mähdrescher (1) mit einer Abscheideeinrichtung (7), **dadurch gekennzeichnet, dass** die Abscheideeinrichtung (7) nach einem der Ansprüche 1 bis 14 ausgebildet ist.
